# EUROPEAN PATENT SPECIFICATION

(11) **EP 2 217 081 B1**
(45) Date of publication and mention of the grant of the patent: **16.03.2011**
(21) Application number: 08852978.9
(22) Date of filing: 03.11.2008
(51) Int. Cl.: A23C 11/10, A23J 3/16, A23L 1/0534, A23L 1/211, A23L 1/305, A23L 2/66

(54) **FERMENTED SOY-BASED BEVERAGE**
AUF FERMENTIERTEM SOJA BASIERENDES GETRÄNK
BOISSON À BASE DE SOJA FERMENTÉE

(30) Priority: 23.11.2007 EP 07121421
(43) Date of publication of application: 18.08.2010
(73) Proprietor: Unilever N.V., 3013 AL Rotterdam (NL); Unilever PLC, London EC4Y 0DY (GB)
(72) Inventor: MELLEMA, Michel, NL-3133 AT Vlaardingen (NL); DE SMIT, Jan, C, NL-3133 AT Vlaardingen (NL); STRÖM, Anna, H, E, NL-3133 AT Vlaardingen (NL)
(74) Representative: Wurfbain, Gilles L.
(86) International application number: PCT/EP2008/064868
(87) International publication number: WO 2009/065725

(56) References cited:
- WO-A-03/041507
- JP-A- 2007 068 410
- US-A1- 2005 238 785
- US-A1- 2006 286 268
- PAIK I S ET AL: "Keeping quality of yogurt beverage prepared from soy protein concentrate" FSTA, 1985, XP002227513

## Description

### Field of the Invention

The present invention relates to the field of fermented (or cultured) soy-containing products, especially fermented soy-based beverages.

### Background of the invention

Consumers have become more knowledgeable about protein and its role in a healthy diet. This new understanding has had a profound effect, stimulating consumer interest and demand for healthier beverages that are fortified with protein. Because beverages are a convenient way to incorporate protein into the diet, manufacturers continue to formulate new products in an effort to make protein more accessible to a wider group of consumers.

The two most popular beverage proteins are whey and soy, and their various isolate derivatives. According to the U.S. Food and Drug Administration, the consumption of food products rich in soy protein can reduce cholesterol, enhance athletic performance, and even aid in the battle against diabetes. In addition, interest for milk replacement by soy protein has increased in view of, on the one hand, issues in relation to over-sensitivity and/or intolerance towards milk constituents experienced by growing numbers of consumers and, on the other hand, elevated milk protein prices and supply issues that some manufacturers are experiencing relative to this commodity. Soy proteins have been proposed to replace milk proteins, either partially or totally, depending on the system, and dairy-like products have been developed based entirely on soy protein.

In view of soy protein's documented health benefits it is desirable to incorporate substantial quantities of soy protein in beverages. However, incorporation of soy protein in beverage formulations often results in "off-flavours", making it necessary for beverage manufacturers to employ masking ingredients. Common issues experienced involve heat stability, acid stability, clarity, dispersability (in dry mix applications) and solubility. Especially in the field of fermented dairy-like beverages, wherein part or all of the milk protein is replaced with soy protein, it has proven difficult to mimic the mouthfeel and texture, typically smoothness and/or creaminess, of the original milk-protein based beverages.

In soy-based beverages the key challenges are flavour, texture and protein stability. Soy-based acid or fermented beverages usually make use of a protein stabilizing agent, such as pectin, to prevent protein precipitation. Nonetheless, despite the use of protein stabilizing agents, stability of soy-based beverages can easily be adversely affected by e.g. thermal processing.

In order to be accepted by consumers, fermented soy-based beverages must have a pleasant mouthfeel, especially a creamy mouthfeel that is typical of their full dairy counterparts. So far, manufacturers have experienced great difficulty in achieving such a creamy mouthfeel in fermented soy-based beverages.

FMC BioPolymer, has launched Avicel RT 1133 cellulose gel, which is claimed to provide long-term shelf stability and creamy mouthfeel at reduced retort-processing time. Inclusion of this product in soy-protein based products, e.g. yoghurt, is said to offer an excellent flavour profile, as well as a reliable product consistency without separation or settling.

The Derwent abstract of JP 2007068410 discloses an acidic soybean-milk drink containing fibrous insoluble cellulose having an average diameter of 0.01-1 micron. The aggregation and precipitation in acidic condition is suppressed.

WO 03/041507 describes a ready to consume liquid food drink, comprising a particulated cereal product, a stabiliser and milk. It is explained in the international patent application that the term "milk" encompasses liquid milk type products derived from plants, including soy milk, rice milk, coconut milk. The preferred food stabilizer is micro-crystalline alpha-cellulose, sold under the trade name Avicel® by the FMC Corporation in Pennsylvania.

US 7,108,881 discloses methods of processing soy-derived materials for use in cultured soy products. According to this document a soy-containing fermented product is provided by fermenting a mixture of a deflavoured soy milk material and an effective amount of a dairy culture. It is stated in US 7,108,881 that when a bulky flavouring or sweetener is added to the soy-containing yoghurt after fermentation the natural consistency of the product is modified and it may become necessary to add stabilizers of a type and in an amount sufficient to restore the natural yoghurt-like texture. Natural and synthetic hydrophilic colloids, such as carboxymethyl cellulose, vegetable/fruit gums, pectin, carrageenans and alginates are added prior to or after fermentation.

It is an object of the present invention to provide an improved fermented soy-based beverage, having a texture, especially a creamy mouthfeel, that does nct noticeably differ from that cf fermented beverages based on milk protein instead of soy protein. In addition it is an object of the invention to achieve higher stability of the fermented beverage during storage and/or processing as compared to prior art soy-based fermented beverages.

### Summary of the Invention

The present inventors have surprisingly found that these objectives can be realized by the incorporation of an effective amount of insoluble cellulosic fibre in a fermented soy-based beverage prior to, during or after fermentation, wherein the cellulosic fibres are non-hydrolysed and underivatised and wherein the cellulose molecules contained within the insoluble cellulosic fibres contain at least 1000 β-(1→4)-D-glucopyranose units. In particular, it was found that soy-based fermented beverages having a pH of 3.5-5.5 and containing 1.5-8.0 wt.% of soy protein and 0.03-0.8 wt.% of insoluble cellulosic fibre have a very pleasant creamy mouthfeel. In addition it was found that these beverages exhibit improved emulsion stability, typically reflected by a reduced rate of syneresis of the composition, as compared to prior art soy-based fermented beverages.

The insoluble cellulosic fibre employed in accordance with the present invention can be isolated from varies fruit, such as citrus fruit, tomatoes, peaches, pears, apples and plums. The inventors have achieved excellent results with insoluble citrus fibres.

The present invention also provides a method of preparing the aforementioned fermented soy-based beverages. Another aspect of the invention relates to the use of insoluble cellulosic fibres for improving the texture and/or mouthfeel of fermented soy-based beverages.

### Detailed description of the invention

Thus, a first aspect of the invention concerns a fermented soy-based beverage having a water content of at least 80 wt.%, a soy protein content of 0.5-8.0 wt.% and a pH in the range of 3.5-5.5, preferably in the range of 3.5-5.0, said beverage further containing from 0.03 to 0.8 wt.% of insoluble cellulosic fibres.

As used herein the term "fermented soy-based beverage", refers to a liquid composition in which the main source of protein is soy protein and which has been fermented using bacteria, preferably lactic acid bacteria. Typical examples of such beverages include soy yoghurts and soy yoghurt drinks, i.e. products fermented with yoghurt culture, which, according to the Codex Alimetarius, FAO/WHO 1977, include Lactobacillus bulgaricus and Streptococcus thermophilus*.*

The beverages of the invention preferably have a water content of at least 85 wt%, most preferably 87 wt%, based on the total weight of the fermented soy-based beverage. The stabilising effect of the cellulosic fibres is very pronounced in beverages having a pH within the range of 3.7-5.5, especially within the range of 4-5.

According to a preferred embodiment, the soy protein content of the soy-based fermented beverage of the invention is within the range of 2-7 wt%, most preferably 2.5-6.5 wt%, based on the total weight of the fermented soy-based beverage.

"Soy protein content", as used herein, refers to the total amount of soy protein and soy protein derived peptides contained in the fermented beverage. The fermented beverage may be based on soy protein, on soy protein hydrolysate or combinations thereof. As will be understood by the skilled person enzymatic as well as acid hydrolysis of peptide bonds may occur during fermentation.

Cellulose is found in plants as microfibrils, which typically have a diameter of 2-20 nm and a length of 100-40,000 nm. These form the structurally strong framework in the cell walls of plant materials. Cellulose is a linear polymer of β-(1→4)-D-glucopyranose units. Cellulose molecules typically consist of between 2,000-14,000 of such units and are completely insoluble in normal aqueous solutions. When dispersed in an aqueous solution insoluble cellulosic fibres typically bind considerable amounts of water. Cellulosic fibres may contain other fibrous components such as hemicelluloses, pectins and lignin. Purified cellulose is used as a starting material for the manufacture of a number of water-soluble hydrocolloids, such as carboxymethyl cellulose (CMC). The manufacture of these cellulose derivatives involves chemical modification of the natural cellulose material. CMC, for instance, is synthesized by the alkali-catalyzed reaction of cellulose with chloroacetic acid. The polar (organic acid) carboxyl groups render the cellulose soluble and chemically reactive.

The cellulosic fibres of the present invention are completely underivatised. According to a most preferred embodiment of the invention the insoluble cellulosic fibres are natural cellulosic fibres which have not been chemically modified.

Unlike, for instance, microcrystalline cellulose, the cellulose molecules within the present cellulosic fibres are non-hydrolysed. The cellulose molecules contained within the insoluble cellulosic fibres employed in accordance with the present invention contain at least 1,000, preferably at least 2,000 β-(1→4)-D-glucopyranose units.

It was found that insoluble cellulosic fibres originating from fruit yield particularly satisfactory results. According to a particularly preferred embodiment the insoluble cellulosic fibres employed originate from citrus fruit, tomatoes, peaches, pears, apples, plums or combinations thereof. Even more preferably, the insoluble cellulosic fibres are insoluble citrus fibres. Most preferably, the insoluble citrus fibres originate from the albedo and the flavedo of the citrus fruits.

The insoluble cellulosic fibres employed in the fermented soy-based beverages of the present invention typically have a length of 1-200 µm. Preferably, the cellulosic fibres have an average length of 5-100 µm, most preferably of 10-80 µm.

In accordance with yet another preferred embodiment of the invention a soy-based fermented beverage as defined herein before is provided, wherein the insoluble cellulosic fibres have a water binding capacity of 6-30 wt.%, more preferably of 7-25 wt.%, most preferably of 8-20 wt.%. The water binding capacity expressed in wt.% refers to the weight of the water that can be absorbed per weight unit of the insoluble cellulosic fibres. A suitable method of determining this parameter in accordance with the invention is provided by the following procedure. The water binding capacity has been determined by slowly adding water to a fixed mass of the cellulosic fibres until no more water is taken up.

The beverage obtained by the present method has a rheology that is quite different from that of e.g. set yogurt. The present beverage preferably has a relatively low viscosity, e.g. a viscosity at a temperature of 7 °C of less than 400 mPa.s at 100 s⁻¹, most preferably of less than 300 mPa.s at 100 s⁻¹. A viscosity of 400 mPa.s at 100 s⁻¹ means that the product is 400 times more viscous than water and about 200 times more viscous than milk. Viscosity is suitably measured with the help of a rheometer AR1000 (TA Instruments, Etten-Leur, the Netherlands), using cone plate geometry. The diameter of the cone being 40 mm, with an angle of 2% and a gap of 70µm. The viscosity is recorded during a shear sweep between 0.03-1000s⁻¹. The measuring temperature is 5 °C and controlled by a Peltier system. The inventors have observed a positive correlation between the mouthfeel of the present fermented soy-based beverage and the so called specific storage modulus G', which is a parameter commonly used in the art of describing rheological behaviour of visco-elastic systems. In accordance with a preferred embodiment. the fermented soy-based beverage has a storage modulus G' of at least 8 Pa and G" of at least 2 Pa at a temperature of 5 °C at an oscillatory stress between 0.01-0.1 Pa. More preferably the beverage has a storage modulus G' of at least 20 Pa and G" of at least 3 Pa at an oscillatory stress between 0.01-1 Pa, most preferably a G' of at least 30 Pa and a G" of at least 8 Pa at an oscillatory stress between 0.01-8 Pa, at an oscillatory stress between 0.01-0.1 Pa. Preferably, G' should show a significant decrease over the range of oscillatory stresses from 0.1 to 10 Pa, more preferably a decrease in this range of at least one order of magnitude, most preferably a decrease in this range of at least two orders of magnitude.

The moduli G' and G" as mentioned herein are measured using a TA AR1000 from TA instruments. The moduli are determined using an oscillatory stress sweep (the stress ranging from 0.01-100Pa) at a frequency of 1Hz and T=5°C. The beverages of the present invention offer the advantage that they show little or no instability. Instability here refers to physical instabilities like creaming, sedimentation or syneresis. Creaming refers to the build-up of ingredients at the top of the packaging. An example of this is the lightest ingredients floating to the top, leaving a more clear solution at the bottom. Sedimentation refers to the build-up of ingredients at the bottom of the packaging. An example of this is the heaviest ingredients sinking to the bottom, leaving a more clear solution at the top. The term "syneresis" refers to the exudation or segregation of (clear) aqueous liquid from the (opaque) beverage. Syneresis can be expressed as the amount (in grams) of liquid segregated from a specified amount of the beverage over a specified period of time.

All instabilities pose a serious consumer issue as they adversely affect the appearance and hedonic quality of the beverage and because it is very difficult to undo the undesirable effect of destabilisation, except if rigorous shaking or intensive stirring is applied. In accordance with a preferred embodiment of the present invention, the level of instability observed after two weeks at 7°C is less than 1% of the total product volume. The level of instability is measured by storing flasks filled with 100 ml of the beverage under the conditions specified above, followed by measuring the volume of separated liquid (top or bottom) or sediment (bottom) using a ruler. Advantageously, the beverage of the invention comprises a significant amount of lactic acid. Preferably, the beverage contains at least 0.05 wt.% of lactic acid, more preferably at least 0.2 wt.% of lactic acid, most preferably at least 0.4 wt.% of lactic acid.

Both taste and mouthfeel of the present beverage are favourable affected by the presence of at least a limited amount of dispersed oil. In accordance with a preferred embodiment, the fermented beverage contains 0.05-5 wt.%, more preferably 0.08-3 wt%, most preferably 0.1-1.5 wt% of dispersed oil. The dispersed oil is preferably present as discrete droplets having a mass weighted average diameter of 0.5-7 µm, preferably of 0.8-5µm. The dispersed oil preferably is a triglyceride oil, notably a triglyceride oil having an unsaturated fatty acid content of at least 50 wt.%. Most preferably, the dispersed oil is soy oil.

The fermented soy-based beverage of the present invention has preferably been fermented by lactic acid bacteria and/or *Bifidobacterium.* Even more preferably, the present beverage has been fermented by lactic acid bacteria. The lactic acid bacteria are advantageously selected from strains that belong to the genus *Lactococcus, Streptococcus, Leuconostoc* or *Lactobacillus.* Advantageously, the lactic acid bacteria strains used in accordance with the present invention are selected from *Lactobacillus helveticus, Lactobacillus acidophilus, Streptococcus thermophilus, Lactobacillus delbrueckii* (including subspecies *bulgaricus* and *lactis), Lactobacillus casei, Lactobacillus* reuteri, Lactobacillus *rhamnosus Lactobacillus fermentum, Lactococcus lactis* (including its subspecies such as *cremoris* and *lactis), Leuconostoc mesenteroides, Leuconostoc cremoris, Leuconostoc lactis, Lactobacillus brevis, Lactobacillus fermentum,*

*Lactobacillus sake* and combinations of two or more these strains. The bacteria either survive to live in the end product, or are killed by heating (pasteurisation, sterilisation), to prolong shelf life.

The present invention enables the manufacture of soy-based beverages of high stability without using high levels of pectins, notably low methoxy pectin and/or high methoxy pectin. Consequently, in a preferred embodiment, the beverage contains less than 1% wt.%, preferably less than 0.75 wt%, most preferably less than 0.5 wt% of a high methoxy pectin.

The fermented soy-based beverage of the present invention can contain significant amounts of fruit and/or vegetable constituents, preferably fruit constituents, such as fruit chunks, fruit juices, fruit concentrates etc.

The fermented soy-based beverage can further contain one or more additional ingredients selected from the group of sweeteners, flavouring substances, preservatives, vitamins, minerals, satiety inducing or enhancing agents, cholesterol lowering agents, etc. Each and every class of these ingredients is well-known in the art and the skilled person will be able to provide suitable examples and to determine by routine experimentation the amounts in which they are most advantageously applied.

A second aspect of the invention concerns a method of preparing a fermented soy-based beverage according to any one of the preceding claims, said method comprising:
- inoculating a pasteurised or sterilised aqueous liquid containing 0.5-6 wt.% of dissolved soy protein with a starter culture;
- continuing fermentation at temperature in the range of 25-45°C for 2-24 hours;
- filling the fermented beverage so obtained into sealable containers; and
- sealing the filled containers;
wherein, insoluble cellulosic fibres are added to the liquid, the fermenting liquid and/or the fermented beverage in an amount of 0.03-0.8% by weight of the fermented beverage wherein the cellulosic fibres are non-hydrolysed and underivatised and wherein the cellulose molecules contained within the insoluble cellulosic fibres contain at least 1000 β-(1→4)-D-glucopyranose units. The insoluble cellulosic fibres are added to the liquid before sealing of the containers. Thus, said insoluble cellulosic fibres may be added before, during or after fermentation. Naturally, it is also feasible to add the citrus fibres in two or more steps, e.g. one part prior to fermentation and another part after fermentation. Preferably, the insoluble cellulosic fibres are added before fermentation, especially in case a beverage with live lactic acid bacteria is prepared. Thus, the fibres can be pasteurised or sterilized together with the other beverage constituents prior to, during or after fermentation. According to a particularly preferred embodiment of the present method the fermented beverage is pasteurised or sterilised. The fermented beverage may be pasteurised or sterilised prior to filling, or it may be pasteurised or sterilised in the container.

It is furthermore preferred that the liquid is homogenised after addition of the insoluble cellulosic fibre. It was found that the stabilising effect of the cellulosic fibres can be increased significantly by such homogenisation. Typically the liquid is homogenised at a pressure of at least 50 bar, more preferably of at least 80 bar and most preferably of at least 130 bar.

According to a particularly preferred embodiment, the present method comprises homogenisation of the fermented beverage. It was found that in the absence of cellulosic fibres, homogenisation of the fermented beverage causes the beverage to destabilise, especially if the fermented beverage is also subjected to pasteurisation or sterilisation. The aqueous liquid in accordance with the invention contains water and soy protein in amounts essentially as indicated herein above for the fermented beverage. More in particular the aqueous liquid comprises 0.75-6 wt%, preferably 2-3.5 wt% of soy protein. The soy protein may suitably be provided in the form of soy milk, soy milk powders, soy protein isolate, hydrolysed soy protein isolate or a combination thereof. Suitable soy milk (extracts), soy protein isolates or hydrolysed soy protein isolates are commercially available, for example from suppliers such as Solae, Cargill, Kerry Group plc and SunOpta plc. In a particular preferred embodiment of the invention the soy milk (extract), soy protein isolate or hydrolyzed soy protein isolate has been de-flavoured using any of the methods described in the prior art, such as for example in US 7,108,881.

The aqueous liquid containing dissolved soy protein should have been pasteurized or sterilized prior to fermentation in order to avoid microbial contamination. Sterilisation and pasteurization may be achieved using different techniques well-known in the art, such as heat treatment, membrane filtration, ultra high pressure etc.

Typically, the step of inoculating the liquid, involves applying a starter culture containing a sufficient amount of viable bacteria to the liquid. Typically, starter culture is added in an amount that is adequate to yield in the order of 10⁴-10⁹ Cfu/ml right after fermentation. According to a preferred embodiment, the starter culture delivers at the end of the fermentation 10^{4.5}-10^{8.5}, preferably 10⁵-10⁸ per ml of viable cells. The viable strains contained in the starter culture advantageously include lactic acid bacteria strains belonging to the group consisting of *Streptococcus, Lactobacillus, Leuconostoc, Lactococcus* and/or *Bifidobacterium.*

After inoculation the aqueous liquid is incubated to effect fermentation. Fermentation advantageously takes place at a temperature of 28-45°C, most preferably 35-45°C. Fermentation is preferably continued for 3-24 hours, most preferably for 4-12 hours.

The present method advantageously employs a starter culture of micro-organisms that generate a food grade acid during fermentation. Examples of such food grade acids are lactic acid and acetic acid. In accordance with a particularly preferred embodiment, during fermentation the pH of the aqueous liquid decreases by at least 1.5 pH units and/or a final pH of maximally not more than 5.5 is reached. Preferably, during fermentation the pH of the aqueous liquid decreases by at least 2 pH units. Advantageously the final pH reached is less than 5.0.

In accordance with a preferred embodiment of the present invention, between 0.5 and 20 g/l of carbohydrate substrate is digested during fermentation. Said carbohydrate substrate is preferably selected from the group of sucrose, glucose or fructose, most preferably said carbohydrate substrate is a mixture of any of these, most preferably a mixture of sucrose and glucose. Sugars naturally present in soy milk (including complex sugars like raffinose and stachyose) or any added sugars can be digested during fermentation.

In accordance with another particularly preferred embodiment of the present invention the aqueous liquid is prepared by combining the insoluble cellulosic fibres with a soy protein and optionally water, preferably followed by homogenization at a pressure of at least 50 bar.

As mentioned above, the method of the invention further comprises filling the fermented beverage obtained into sealable containers. Preferably, the filling is done under aseptic conditions.

A third aspect of the present invention concerns the use of insoluble cellulosic fibres for improving the mouthfeel and/or texture of a soy-based fermented beverage, wherein the cellulosic fibres are non-hydrolysed and underivatised and wherein the cellulose molecules contained within the insoluble cellulosic fibres contain at least 1000 β-(1-4)-D-glucopyranose units. Preferred embodiments of this particular use have been described herein before.

The invention is further illustrated by means of the following example.

### Example

Fermented soy-based beverages were prepared from the following premixes:
Prebase:

| Ingredient | Supplier | Concentration in wt.% | |
|---|---|---|---|
| | | Invention | Reference |
| Whole bean extract (WBE) | Sunopta Grains and Food Group, Hope, MN, USA | 5.6 | 5.6 |
| Sucrose | | 3 | 3 |
| AQplus N (Citrus Fibres, 90% insolubles) | Herbafood GmbH, Germany | 0.2 | |
| Water (deionised) | | 91.2 | 91.4 |

The ingredients were mixed at 70°C, pasteurised and homogenised at 150 bar. Next, the solution was cooled to 43°C and the starter culture (T-051046 a mixed culture of *Streptococcus thermophilus* strains, ex Chr. Hansen, Hørsholm, Denmark) was added. The solution reached a pH of 5 after 3 hours following which the pH was reduced to approximately 4.5 using lactic acid. After acidification the beverage was pasteurised to kill the bacteria and homogenised at 150 bar. The beverage was hot filled into containers that were sealed and subsequently stored at 5°C.

During storage under ambient conditions, the reference product started to develop 5-10% separation in the form of a transparent layer after only a few days. Separation was observed in the product according to the present invention only after the product had been stored for 3 weeks or longer.

At a temperature of 5 °C and at a oscillatory stress between 0.01 and 0.1 Pa the product containing the citrus fibres had a storage modulus G' of 40-70 Pa and G" of 8-10 Pa. Under these same conditions, the reference product exhibited a storage modulus G' and G" of 0.1-0.3 Pa. For these measurements a TA Instruments AR1000 rheometer was used. The geometry was cone-plate (2° angle, 4 cm diameter, gap 71 µm).

The two products were evaluated by a sensory panel. The results showed that the product according to the invention scored significantly higher on the attributes "thickness, sliminess and creaminess". These attributes are considered to be favourable sensory attributes for yogurt-type drinks.

## Claims

1. A fermented soy-based beverage having a water content of at least 80 wt.%, a soy protein content of 0.5-8.0 wt.% and a pH in the range of 3.5-5.5, said beverage further containing from 0.03 to 0.8 wt.% of insoluble cellulosic fibres, which fibres are non-hydrolysed and are underivatised, and wherein the cellulose molecules contained within the insoluble cellulosic fibres contain at least 1,000 ß-(1>4)-D-glucopyranose units.

2. Fermented beverage according to claim 1, wherein the insoluble cellulosic fibres contain at least 2,000 ß-(1>4)-D-glucopyranose units.

3. Fermented beverage according to any of the preceding claims, wherein at a temperature of 5 °C and at an oscillatory stress between 0.01 and 0.1 Pa the beverage has a storage modulus G' of at least 8 Pa and G" of at least 2.

4. Fermented beverage according to any one of the preceding claims, having a pH in the range of 3.5-5.0.

5. Fermented beverage according to any one of the preceding claims, wherein the insoluble cellulosic fibres originate from citrus fruit, tomatoes, peaches, pears, apples, plums or combinations thereof.

6. Fermented beverage according to claim 4, wherein the insoluble cellulosic fibres are insoluble citrus fibres.

7. Fermented beverage according to any one of the preceding claims, wherein the insoluble cellulosic fibres have a water binding capacity of 6-30 wt.%.

8. Fermented beverage according any one of the preceding claims, wherein the beverage contains at least 0.05 wt.% of lactic acid.

9. Fermented beverage according to any one of the preceding claims, wherein the beverage has been fermented by lactic acid bacteria and/or *Bifidobacterium*.

10. A method of preparing a fermented soy-based beverage according to any one of the preceding claims, said method comprising:
- inoculating a pasteurised or sterilised aqueous liquid containing 0.5-6 wt.% of dissolved soy protein with a starter culture;
- continuing fermentation at temperature in the range of 25-45 °C for 2-24 hours;
- filling the fermented beverage so obtained into sealed containers; and
- sealing the filled containers;
wherein insoluble cellulosic fibres are added to the liquid, to the fermenting liquid and/or to the fermented beverage in an amount of 0.03-0.8% by weight of the fermented beverage, which cellulosic fibres are non-hydrolysed and are underivatised, and wherein the cellulose molecules contained within the insoluble cellulosic fibres contain at least 1,000 ß-(1>4)-D-glucopyranose units.

11. Method according to claim 10, wherein the cellulose molecules contained within the insoluble cellulosic fibres contain at least 2,000 ß-(1>4)-D-glucopyranose units.

12. Method according to claim 10 or 11, wherein the starter culture delivers 10⁴-10⁹ viable cells per ml of lactic acid bacteria and/or *Bifidobacterium* at the end of the fermentation.

13. Method according to any one of claims 10-12, wherein during fermentation the pH of the aqueous liquid decreases by at least 1.5 pH units and/or a final pH of not more than 5.5 is reached.

14. Method according to any one of claims 10-13, wherein the insoluble cellulosic fibre is added prior to inoculation.

15. Method according to any one of claims 10-14, wherein the aqueous liquid is prepared by combining the insoluble cellulosic fibres with a soy protein source and optionally water, followed by homogenization at a pressure of at least 50 bar.

16. Use of insoluble cellulosic fibres for improving the texture of fermented soy-based beverages, wherein the cellulosic fibres are non-hydrolysed and are
underivatised, and wherein the cellulose molecules contained within the insoluble cellulosic fibres contain at least 1,000 ß-(1>4)-D-glucopyranose units.

17. Use according to claim 16, wherein the cellulose molecules contained within the insoluble cellulosic fibres contain at least 2,000 ß-(1>4)-D-glucopyranose units.

## Patentansprüche

1. Fermentiertes Getränk auf Sojabasis, das einen Wassergehalt von wenigstens 80 Gewichts-%, einen Sojaproteingehalt von 0,5 bis 8,0 Gewichts-% und einen pH im Bereich von 3,5 bis 5,5 hat, wobei das Getränk außerdem 0,03 bis 0,8 Gewichts-% unlösliche Cellulosefasern enthält, wobei die Fasern nicht hydrolysiert sind und underivatisiert sind und wobei die Cellulosemoleküle, die in den unlöslichen Cellulosefasern enthalten sind, wenigstens 1000 β-(1>4)-D-Glucopyranose-Einheiten enthalten.

2. Fermentiertes Getränk gemäß Anspruch 1, wobei die unlöslichen Cellulosefasern wenigstens 2000 ß-(1>4)-D-Glucopyranose-Einheiten enthalten.

3. Fermentiertes Getränk gemäß einem der vorangehenden Ansprüche, wobei das Getränk bei einer Temperatur von 5 °C und bei einer oszillatorischen Spannung von zwischen 0,01 und 0,1 Pa ein Speichermodul G' von wenigstens 9 Pa und G" von wenigstens 2 hat.

4. Fermentiertes Getränk gemäß einem der vorangehenden Ansprüche, das einen pH im Bereich von 3,5-5,0 hat.

5. Fermentiertes Getränk gemäß einem der vorangehenden Ansprüche, wobei die unlöslichen Cellulosefasern aus Citrusfrüchten, Tomaten, Pfirsiche, Birnen, Äpfeln, Pflaumen oder Kombinationen davon stammen.

6. Fermentiertes Getränk gemäß Anspruch 4, wobei die unlöslichen Cellulosefasern unlösliche Citrusfasern sind.

7. Fermentiertes Getränk gemäß einem der vorangehenden Ansprüche, wobei die unlöslichen Cellulosefasern eine Wasserbindungskapazität von 6-30 Gewichts-% haben.

8. Fermentiertes Getränk gemäß einem der vorangehenden Ansprüche, wobei das Getränk wenigstens 0,05 Gewichts-% Milchsäure enthält.

9. Fermentiertes Getränk gemäß einem der vorangehenden Ansprüche, wobei das Getränk durch Milchsäurebakterien und/oder Bifidobacterium fermentiert wurde.

10. Verfahren zur Herstellung eines fermentierten Getränks auf Sojabasis gemäß einem der vorangehenden Ansprüche, wobei das Verfahren umfasst:
- Inokulieren einer pasteurisierten oder sterilisierten wässrigen Flüssigkeit, die 0,5-6 Gewichts-% gelöstes Sojaprotein enthält, mit einer Starterkultur;
- Fortsetzen der Fermentation bei einer Temperatur im Bereich von 25-45 °C für 2-24 Stunden;
- Füllen des so erhaltenen fermentierten Getränks in dicht verschließbare Behälter und
- dichtes Verschließen der gefüllten Behälter;
wobei unlösliche Cellulosefasern zu der Flüssigkeit, zu der fermentierenden Flüssigkeit und/oder dem fermentierten Getränk in einer Menge von 0,03-0,8 Gewichts-% des fermentierten Getränks gegeben werden, wobei die Cellulosefasern nicht hydrolysiert sind und underivatisiert sind und wobei die Cellulosemoleküle, die in den unlöslichen Cellulosefasern enthalten sind, wenigstens 1000 β-(1>4)-D-Glucopyranose-Einheiten enthalten.

11. Verfahren gemäß Anspruch 10, wobei die Cellulosemoleküle, die in den unlöslichen Cellulosefasern enthalten sind, wenigstens 2000 β-(1>4)-D-Glucopyranose-Einheiten enthalten.

12. Verfahren gemäß Anspruch 10 oder 11, wobei die Starterkultur 10⁴-10⁹ lebensfähige Zellen pro ml Milchsäurebakterien und/oder Bifidobacterium am Ende der Fermentation liefert.

13. Verfahren gemäß einem der Ansprüche 10-12, wobei der pH der wässrigen Flüssigkeit während der Fermentation um wenigstens 1,5 pH-Einheiten abnimmt und/oder ein End-pH von nicht mehr als 5,5 erreicht wird.

14. Verfahren gemäß einem der Ansprüche 10-13, wobei die unlösliche Cellulosefaser vor Inokulation zugesetzt wird.

15. Verfahren gemäß einem der Ansprüche 10-14, wobei die wässrige Flüssigkeit hergestellt wird, indem die unlöslichen Cellulosefasern mit einer Sojaproteinquelle und gegebenenfalls Wasser kombiniert werden, gefolgt von einer Homogenisierung bei einem Druck von wenigstens 50 bar.

16. Verwendung von unlöslichen Cellulosefasern zur Verbesserung der Textur von fermentierten Getränken auf Sojabasis, wobei die Cellulosefasern nicht hydrolysiert sind und underivatisiert sind und wobei die Cellulosemoleküle, die in den unlöslichen Cellulosefasern enthalten sind, wenigstens 1000 β-(1>4)-D-Glucopyranose-Einheiten enthalten.

17. Verwendung gemäß Anspruch 16, wobei die Cellulosemoleküle, die in den unlöslichen Cellulosefasern enthalten sind, wenigstens 2000 β-(1>4)-D-Glucopyranose-Einheiten enthalten.

## Revendications

1. Boisson fermentée à base de soja ayant une teneur en eau d'au moins 80 % en poids, une teneur en protéines de soja de 0,5 à 8,0 % en poids et un pH dans la plage de 3,5 à 5,5, ladite boisson contenant en outre de 0,03 à 0,8 % en poids de fibres cellulosiques insolubles, lesquelles fibres sont non hydrolysées et sont non dérivatisées, et où les molécules de cellulose contenues dans les fibres cellulosiques insolubles contiennent au moins 1 000 motifs β-(1>4)-D-glucopyranose.

2. Boisson fermentée selon la revendication 1, dans laquelle les fibres cellulosiques insolubles contiennent au moins 2 000 motifs β-(1>4)-D-glucopyranose.

3. Boisson fermentée selon l'une quelconque des revendications précédentes, dans laquelle à une température de 5°C et à une contrainte oscillatoire comprise entre 0,01 et 0,1 Pa, la boisson a un module de conservation G' d'au moins 8 Pa et G" d'au moins 2.

4. Boisson fermentée selon l'une quelconque des revendications précédentes, ayant un pH dans la plage de 3,5 à 5,0.

5. Boisson fermentée selon l'une quelconque des revendications précédentes, dans laquelle les fibres cellulosiques insolubles ont pour origine des agrumes, des tomates, des pêches, des poires, des pommes, des prunes ou leurs combinaisons.

6. Boisson fermentée selon la revendication 5, dans laquelle les fibres cellulosiques insolubles sont des fibres d'agrume insolubles.

7. Boisson fermentée selon l'une quelconque des revendications précédentes, dans laquelle les fibres cellulosiques insolubles ont une capacité de liaison à l'eau de 6 à 30 % en poids.

8. Boisson fermentée selon l'une quelconque des revendications précédentes, dans laquelle la boisson contient au moins 0,05 % en poids d' acide lactique.

9. Boisson fermentée selon l'une quelconque des revendications précédentes, dans laquelle la boisson a été fermentée par des bactéries lactiques et/ou du *Bifidobacterium.*

10. Méthode de préparation d'une boisson fermentée à base de soja selon l'une quelconque des revendications précédentes, ladite méthode comprenant les étapes consistant à :
✔ inoculer un liquide aqueux pasteurisé ou stérilisé contenant 0,5 à 6 % en poids de protéines de soja dissoutes avec une culture de démarrage ;
✔ poursuivre la fermentation à une température dans la plage de 25 à 45°C pendant 2 à 24 heures ;
✔ remplir des contenants obturés avec la boisson fermentée ainsi obtenue ; et
✔ obturer les contenants remplis ;
dans laquelle des fibres cellulosiques insolubles sont ajoutées au liquide, au liquide de fermentation et/ou à la boisson fermentée dans une quantité de 0,03 à 0,8 % en poids de la boisson fermentée, lesquelles fibres cellulosiques sont non hydrolysées et sont non dérivatisées et où les molécules de cellulose contenues dans les fibres cellulosiques insolubles contiennent au moins 1 000 motifs β-(1>4)-D-glucopyranose.

11. Méthode selon la revendication 10, dans laquelle les molécules de cellulose contenues dans les fibres cellulosiques insolubles contiennent au moins 2 000 motifs β-(1>4)-D-glucopyranose.

12. Méthode selon la revendication 10 ou 11, dans laquelle la culture de démarrage délivre 10⁴ à 10⁹ cellules viables par mL de bactéries lactiques et/ou de *Bifidobacterium* à la fin de la fermentation.

13. Méthode selon l'une quelconque des revendications 10 à 12, dans laquelle pendant la fermentation, le pH du liquide aqueux diminue d'au moins 1,5 unité pH et/ou un pH final de pas plus de 5,5 est atteint.

14. Méthode selon l'une quelconque des revendications 10 à 13, dans laquelle la fibre cellulosique insoluble est ajoutée avant inoculation.

15. Méthode selon l'une quelconque des revendications 10 à 14, dans laquelle le liquide aqueux est préparé en combinant les fibres cellulosiques insolubles avec une source de protéines de soja et facultativement de l'eau, puis par homogénéisation à une pression d'au moins 50 bars.

16. Utilisation de fibres cellulosiques insolubles pour améliorer la texture de boissons fermentées à base de soja, dans laquelle les fibres cellulosiques sont non hydrolysées et sont non dérivatisées, et où les molécules de cellulose contenues dans les fibres cellulosiques insolubles contiennent au moins 1 000 motifs β-(1>4)-D-glucopyranose.

17. Utilisation selon la revendication 16, dans laquelle les molécules de cellulose contenues dans les fibres cellulosiques insolubles contiennent au moins 2 000 motifs β-(1>4)-D-glucopyranose.
